# EUROPEAN PATENT APPLICATION

(11) **EP 3 886 214 A1**
(43) Date of publication of application: **29.09.2021**
(21) Application number: 21164992.6
(22) Date of filing: 25.03.2021
(51) Int. Cl.: H01M 4/131, C01G 53/00, H01M 4/1391, H01M 4/525, H01M 10/0525, H01M 4/02

(54) **CATHODE MATERIAL AND PROCESS**

(30) Priority: 27.03.2020 GB 202004509
(71) Applicant: Johnson Matthey Public Limited Company, London EC4A 4AB (GB)
(72) Inventor: COOMER, Fiona Claire, Reading, Berkshire RG4 9NH (GB); CORBIN, James Alexander, Reading, Berkshire RG4 9NH (GB); WALLAR, Cameron Jon, Reading, Berkshire RG4 9NH (GB)
(74) Representative: Lenden, Philip

(57) **Abstract**

The invention relates to improved particulate lithium nickel oxide materials which are useful as cathode materials in lithium secondary batteries, and methods of treating them.

## Description

### Field of the Invention

The present invention relates to improved particulate lithium nickel oxide materials which are useful as cathode materials in lithium secondary batteries, and methods of treating them.

### Background of the Invention

Lithium transition metal oxide materials having the formula LiMO₂, where M typically includes one or more transition metals, find utility as cathode materials in lithium ion batteries. Examples include LiNiO₂ and LiCoO₂.

US 6921609 B2 describes a composition suitable for use as a cathode material of a lithium battery which includes a core composition having an empirical formula LiₓM'_{z}Ni_{1-y}M"_{y}O₂ and a coating on the core which has a greater ratio of Co to Ni than the core.

US10,501,335 describes electrochemically active secondary particles characterized by enriched grain boundaries where the grain boundaries are enriched with Al.

There remains a need for improved lithium transition metal oxide materials and processes for their manufacture.

### Summary of the Invention

Cobalt enrichment at the surface and in the grain boundaries of lithium nickel oxide materials has been found to be advantageous. WO 2013/025328 A1 describes a particle including a plurality of crystallites including a first composition having a layered α-NaFeO₂-type structure. The particles include a grain boundary between adjacent crystallites, and the concentration of cobalt in the grain boundaries is greater than the concentration of cobalt in the crystallites. Cobalt enrichment is achieved by treatment of the particles with a solution of LiNO₃ and Co(NO₃)₂, followed by spray drying and calcining.

However, it is also desirable in the industry to reduce the content of cobalt in such materials, for cost, environmental and ethical reasons. The present inventors have surprisingly found that cobalt enrichment may be achieved by contacting a lithium nickel oxide material with a treatment solution which comprises aluminium ions.

Accordingly, in a first preferred aspect the present invention provides use of a treatment solution comprising aluminium ions at a concentration in the range from 0.05 mol/L to 1.5 mol/L to increase the concentration of cobalt at the surface of particulate lithium nickel oxide material and at the grain boundaries within the particulate nickel oxide material.

In a second preferred aspect the present invention provides a method of treating particulate lithium nickel oxide cathode material comprising
(a) contacting particulate lithium nickel oxide cathode material with a treatment solution comprising aluminium ions to provide a treatment slurry;
(b) drying the treatment slurry to provide an intermediate treated material; and
(c) calcining the intermediate treated material to provide an enriched lithium nickel oxide cathode material comprising (i) a core comprising a plurality of grains and (ii) enriched regions at the surface of the core and at the grain boundaries within the core, the enriched regions comprising a higher concentration of aluminium and cobalt than the core,
wherein the concentration of aluminium ions in the treatment solution is in the range from 0.05 mol/L to 1.5 mol/L.

The use of the first aspect typically comprises a method according to the second aspect.

In a further preferred aspect the present invention provides an enriched particulate lithium nickel oxide cathode material comprising (i) a core comprising a plurality of grains and (ii) enriched regions at the surface of the core and at the grain boundaries within the core, the enriched regions comprising a higher concentration of aluminium and cobalt than the core. The material may be obtained or obtainable by the process of the present invention.

In further aspects, the present invention provides a cathode comprising enriched particulate lithium nickel oxide cathode material according to the present invention, and a lithium secondary cell or battery (e.g. a secondary lithium ion battery) comprising the cathode. The battery typically further comprises an anode and an electrolyte.

### Brief Description of the Drawings

**Figure 1** shows a FIB-TEM image of a region of untreated lithium nickel oxide material used in the Examples, showing the distribution of cobalt.
**Figures 2** **and** **3** show FIB-TEM images highlighting the aluminium distribution in two regions of Sample 1 prepared in the Examples.
**Figures 4** **and** **5** show FIB-TEM images highlighting the cobalt distribution in two regions of Sample 1 prepared in the Examples.
**Figure 6** is a FIB-TEM image showing the aluminium distribution in a region of Sample 2 prepared in the Examples.
**Figure 7** is a FIB-TEM image showing the cobalt distribution in a region of Sample 2 prepared in the Examples.
**Figure 8** is a FIB-TEM image showing the aluminium distribution in a region of Sample 3 prepared in the Examples.
**Figure 9** is a FIB-TEM image showing the cobalt distribution in a region of Sample 3 prepared in the Examples.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

The lithium nickel oxide cathode material contacted with the treatment solution typically has the α-NaFeO₂ crystal structure. It typically includes cobalt in addition to lithium, nickel and oxygen. It may have Formula I:

LiₐNiₓCo_{y}Mg_{z}M_{q}O_{2+b} Formula I

in which
0.8 ≤ a ≤ 1.2
0.7 ≤ x < 1
0 ≤ y ≤ 0.3
0 ≤ z ≤ 0.1
0 ≤ q ≤ 0.2, and
-0.2 ≤ b ≤ 0.2;
wherein M is selected from Al, Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

It may be preferred that a is greater than or equal to 0.9, 0.95, 0.99 or 1.0. It may be preferred that a is less than or equal to 1.1, or less than or equal to 1.05. It may be preferred that 0.90 ≤ a ≤ 1.10, for example 0.95 ≤ a ≤ 1.05. It may be preferred that 0.99 ≤ a ≤ 1.05 or 10 ≤ a ≤ 1.05. It may be particularly preferred that 0.95 ≤ a ≤ 1.05.

It may be preferred that x is less than or equal to 0.99, 0.98, 0.97, 0.96 or 0.95. It may be preferred that x is great than or equal to 0.8, 0.85, 0.9 or 0.95. It may be preferred that 08 ≤ x ≤ 0.99, for example 0.85 ≤ x ≤ 0.98, 0.85 ≤ x ≤ 0.98, 0.85 ≤ x ≤ 0.97, 0.85 ≤ x ≤ 0.96 or 0.90 ≤ x ≤ 0.95. It may be particularly preferred that 0.85 ≤ x ≤ 0.98.

It may be preferred that y is greater than or equal to 0.01, 0.02 or 0.05. It may be preferred that y is less than or equal to 0.25, 0.2, 0.1 or 0.10. For example, 0.01 ≤ y ≤ 0.3, 0.02 ≤ y ≤ 0.2, 0.02 ≤ y ≤ 0.1 or 0.02 ≤ y ≤ 0.10.

It may be preferred that z is greater than or equal to 0.001, 0.002 or 0.005. it may be preferred that z is less than or equal to 0.05, 0.02 or 0.01. For example, 0.001 ≤ z ≤ 0.05, 0.002 ≤ z ≤ 0.02 or 0.002 ≤ z ≤ 0.01.

It may be preferred that b is greater than or equal to -0.1. It may be preferred that b is less than or equal to 0.1. In some embodiments, -0.1 ≤ b ≤ 0.1. In some embodiments, b is 0 or about 0. In some embodiments, b is 0.

M is one or more selected from Al, Mn, V, Ti, B, Zr, Sr, Ca, Cu , Sn, Cr, Fe, Ga, Si, W, Mo, Ta, Y, Sc, Nb, Pb, Ru, Rh and Zn. It may be preferred that M is one or more selected from Mn, V, Ti, B, Zr, Sr, Ca, Cu , Sn, Cr, Fe, Ga, Si and Zn. It may be preferred that M is Mn.

It may be preferred that 0 ≤ q ≤ 0.15. It may be preferred that 0 ≤ q ≤ 0.10. It may be preferred that 0 ≤ q ≤ 0.05. It may be preferred that 0 ≤ q ≤ 0.04. It may be preferred that 0 ≤ q ≤ 0.03. It may be preferred that 0 ≤ q ≤ 0.02. It may be preferred that 0 ≤ q ≤ 0.01. It may be preferred that q is 0.

For example, in Formula I it may be preferred that:
0.95 ≤ a ≤ 1.05
0.85 ≤ x < 0.95
0.02 ≤ y ≤ 0.1
0.002 ≤ z ≤ 0.02
0 ≤ q ≤ 0.05, and
-0.1 ≤ b ≤ 0.1.

The enriched lithium nickel oxide cathode material typically has the α-NaFeO₂ crystal structure. It typically includes cobalt and aluminium in addition to lithium, nickel and oxygen. It may have Formula II:

LiₐNiₓCo_{y}Mg_{z}AlₚM1_{q}O_{2+b} Formula II

in which each of a, b, x, y, z and q are independently as defined above with reference to Formula I, 0.004 ≤ p ≤ 0.15, and M1 is selected from Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

Formula II is intended to be the overall formula of the material, i.e. including both the core and the enriched regions.

It may be preferred that p is greater than or equal to 0.005, 0.008, 0.010, 0.015, 0.018 or 0.020, because higher amounts of aluminium may lead to reduced or no cobalt enrichment following contact with the treatment solution. It may be preferred that p is less than or equal to 0.15, 0.10, 0.05, 0.04, 0.035 or 0.03. For example, 0.010 ≤ p ≤ 0.10 or 0.015 ≤ p ≤ 0.04.

M1 is one or more selected from Mn, V, Ti, B, Zr, Sr, Ca, Cu , Sn, Cr, Fe, Ga, Si, W, Mo, Ta, Y, Sc, Nb, Pb, Ru, Rh and Zn. It may be preferred that M1 is one or more selected from Mn, V, Ti, B, Zr, Sr, Ca, Cu , Sn, Cr, Fe, Ga, Si and Zn. It may be preferred that M1 is Mn. In some embodiments, M1 represents a dopant which is present at a higher concentration within the core of the particle than within the enriched regions.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.008 ≤ p ≤ 0.010
0 ≤ q ≤ 0.05, and
-0.1 ≤ b ≤ 0.1.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.010 ≤ p ≤ 0.05
0 ≤ q ≤ 0.05, and
-0.1 ≤ b ≤ 0.1.

For example, in Formula II it may be preferred that:
0.95 ≤ a ≤ 1.05
0.85 ≤ x < 0.95
0.02 ≤ y ≤ 0.1
0.002 ≤ z ≤ 0.02
0.015 ≤ p ≤ 0.03
0 ≤ q ≤ 0.05, and
-0.1 ≤ b ≤ 0.1.

The amount of aluminium ions included in the treatment solution is typically selected to provide 0.5 to 10 wt% aluminium based on the weight of metals in the lithium nickel oxide cathode material to be treated, excluding lithium. As used herein, wt% aluminium means the proportion of aluminium with respect to the total metals in the particulate lithium nickel oxide cathode material to be treated, excluding lithium. For example, where the particulate material to be treated has 100g of metals other than lithium, and 5.5g of aluminium is added in the treatment step, this is taken to be 5.5wt% aluminium. The amount of aluminium supplied to the particulate lithium nickel oxide cathode material is taken as the amount of aluminium added to the treatment solution, assuming no aluminium loss.

The amount of aluminium ions included in the treatment solution may be selected to provide at least 1.0, 1.5 or 2 wt% aluminium. The amount of aluminium ions included in the treatment solution may be selected to provide 8, 5 or 3 wt% or less aluminium.

It is preferred that the treatment solution as prepared has a concentration of lithium ions of 0.005 mol/L or less. For example, it may have a concentration of lithium ions of 0.001 or 0.0001 mol/L or less. As the skilled person will understand, when the particulate lithium nickel oxide material is contacted with the treatment solution, lithium from the lithium nickel oxide material may become dissolved in the solution. An increase in concentration of lithium in the treatment solution due to lithium ions originating from the lithium nickel oxide material does not affect whether the treatment solution as prepared has the recited concentration. Similarly, a treatment solution comprising lithium ions originating substantially only from the lithium nickel oxide material added during the method of the present invention may be considered to be a treatment solution which does not comprise lithium ions. The treatment solution as prepared may include no intentionally added lithium ions. It may be substantially free of lithium ions (e.g. have a concentration of lithium ions of 0.0001 mol/L or less). The concentration of lithium ions in the treatment solution as prepared may be substantially zero.

The treatment solution is typically an aqueous solution comprising aluminium ions and suitable counterions. The nature of the counterions is not particularly limited and any suitable aluminium salt may be used. Aluminium nitrate may be particularly suitable.

The concentration of aluminium ions in the treatment solution (as prepared) is in the range from 0.05 mol/L to 1.5 mol/L. For example it may be at least 0.08, 0.1, 0.15, 0.2 or 0.25 mol/L. It may be 0.7, 0.5, 0.35 or 0.3 mol/L or less. It may be preferred that the concentration of aluminium ions is in the range from 0.1 to 0.7, e.g. 0.15 to 0.35 mol/L.

It is preferred that the treatment solution as prepared has a concentration of cobalt ions of 0.005 mol/L or less. For example, it may have a concentration of cobalt ions of 0.001 or 0.0001 mol/L or less. As the skilled person will understand, when the particulate lithium nickel oxide material is contacted with the treatment solution, cobalt from the lithium nickel oxide material may become dissolved in the solution. An increase in concentration of cobalt in the treatment solution due to cobalt ions originating from the lithium nickel oxide material does not affect whether the treatment solution as prepared has the recited concentration. Similarly, a treatment solution comprising cobalt ions originating substantially only from the lithium nickel oxide material added during the method of the present invention may be considered to be a treatment solution which does not comprise cobalt ions. The treatment solution as prepared may include no intentionally added cobalt ions. It may be substantially free of cobalt ions (e.g. have a concentration of cobalt ions of 0.0001 ml/L or less). The concentration of cobalt ions in the treatment solution as prepared may be substantially zero. It is preferred that the lithium nickel oxide material contacted with the treatment solution comprises cobalt.

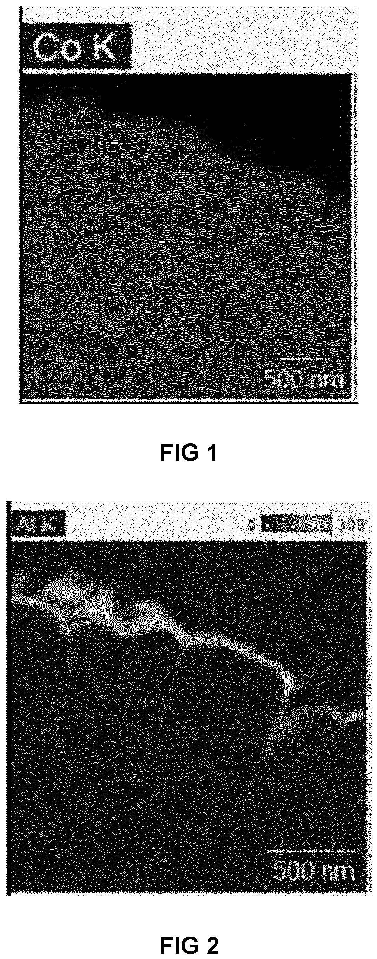

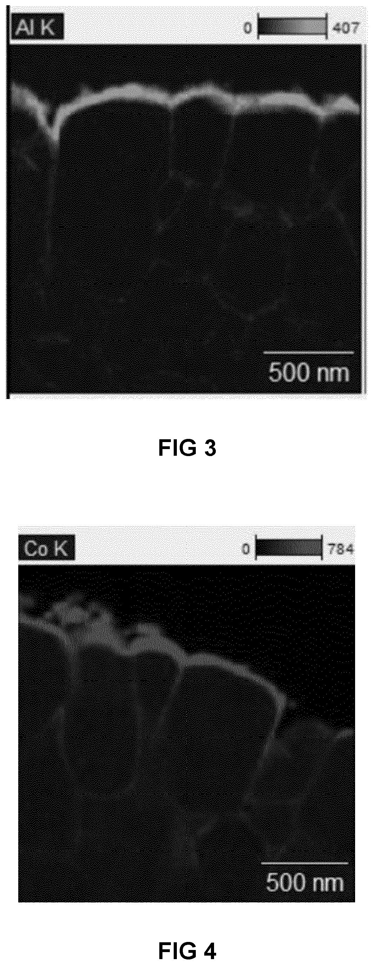

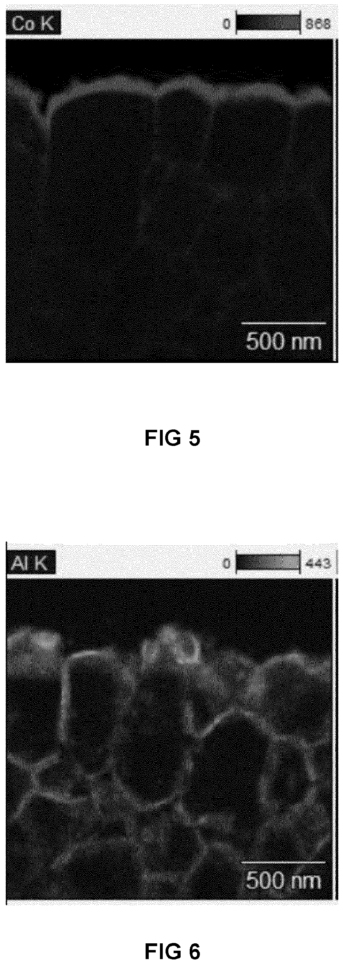

The enriched lithium nickel oxide material comprises a core comprising a plurality of grains and enriched regions at the surface of the core and at the grain boundaries within the core, the enriched regions comprising a higher concentration of aluminium and cobalt than the core. The presence of a higher concentration of aluminium and cobalt in the enriched regions may be determined using FIB-TEM, for example using the method set out in the Examples below. Figures 2,3, 6 and 8 give FIB-TEM images evidencing a higher concentration of aluminium in the enriched regions. Figures 4 and 5 give FIB-TEM images evidencing a higher concentration of cobalt in the enriched regions. The increased concentration in the enriched region may be sufficient to be observable by visual review of elemental maps obtained by FIB-TEM. As used herein, the term "grain boundary" means the region at the boundary between adjacent crystal grains within a particle of lithium nickel oxide material.

The particulate (enriched) lithium nickel oxide material typically has a D50 particle size of at least 4 µm, e.g. at least 5 µm, at least 5.5 µm, at least 6.0 µm or at least 6.5 µm. The particles of lithium nickel oxide (e.g. secondary particles) typically have a D50 particle size of 20 µm or less, e.g. 15 µm or less or 12 µm or less. Unless otherwise specified herein, the D50 particle size refers to Dv50 (volume median diameter) and may be determined by using the method set out in ASTM B822 of 2017 under the Mie scattering approximation, for example using a Malvern Mastersizer 3000.

The D10 particle size of the material may be from about 0.1 µm to about 10 µm, for example about 1 µm to about 10 µm, about 2 µm to about 8 µm, or from about 5 µm to about 7 µm. Unless otherwise specified herein, the D10 particle size refers to Dv10 (10% intercept in the cumulative volume distribution) and may be determined by using the method set out in ASTM B822 of 2017 under the Mie scattering approximation, for example using a Malvern Mastersizer 3000.

The D90 particle size of the material may be from about 10 µm to about 40 µm, for example from about 12 µm to about 35 µm, about 12 µm to about 30 µm, about 15 µm to about 25 µm or from about 16 µm to about 20 µm. Unless otherwise specified herein, the D90 particle size refers to Dv90 (90% intercept in the cumulative volume distribution) and may be determined by using the method set out in ASTM B822 of 2017 under the Mie scattering approximation, for example using a Malvern Mastersizer 3000.

The method and use of the present invention may comprise contacting particulate lithium nickel oxide cathode material with a treatment solution to provide a treatment slurry. For example, the particulate lithium nickel oxide cathode material may be immersed in the treatment solution. The particulate lithium nickel oxide material is typically contacted with (e.g. immersed in) the treatment solution at a temperature of 1-100°C, for example 20-80 °C or 30-70 °C. The particulate lithium nickel oxide material is typically contacted with (e.g. immersed in) the treatment solution for a period of 1 minute to 24 hours, for example 1 minute to 5 hours, 1 minute to 1 hour, or 5 to 30 minutes. The treatment slurry may be heated under reflux.

The method and use may comprise drying the treatment slurry. The drying step may be carried out by any suitable drying process such as processes involving heating and/or evaporation. Spray drying may be preferred.

The intermediate treated material is calcined to provide an enriched lithium nickel oxide material. The calcination step may be carried out at a temperature of at least 400 °C, at least 500 °C, at least 600 °C or at least 650 °C. The calcination step may be carried out at a temperature of 1000 °C or less, 900 °C or less, 800 °C or less or 750 °C or less. During the calcination, the enriched lithium nickel oxide material to be calcined may be at a temperature of 400 °C, at least 500 °C, at least 600 °C or at least 650 °C for a period of at least 30 minutes, at least 1 hour or at least 2 hours. The period may be less than 24 hours.

The calcination step may be carried out under a CO₂-free atmosphere. For example, CO₂-free air may be flowed over the materials to be calcined during calcination and optionally during cooling. The CO₂-free air may, for example, be a mix of oxygen and nitrogen. The CO₂-free atmosphere may be oxygen (e.g. pure oxygen). Preferably, the atmosphere is an oxidising atmosphere. As used herein, the term "CO₂-free" is intended to include atmospheres including less than 100 ppm CO₂, e.g. less than 50 ppm CO₂, less than 20 ppm CO₂ or less than 10 ppm CO₂. These CO₂ levels may be achieved by using a CO₂ scrubber to remove CO₂.

The method or use may include one or more milling steps, which may be carried out at any point, for example before the contact with the treatment solution, after drying the treatment slurry and/or after calcining the intermediate treated material. The nature of the milling equipment is not particularly limited. For example, it may be a ball mill, a planetary ball mill or a rolling bed mill. The milling may be carried out until the particles reach the desired size. For example, the particles of lithium nickel oxide (e.g. secondary particles) are typically milled until they have a D50 particle size of at least 4.5 µm, e.g. at least 5 µm, at least 6 µm or at least 6.5 µm. The particles of lithium nickel oxide (e.g. secondary particles) are typically milled until they have a D50 particle size of 15 µm or less, e.g. 14 µm or less or 13 µm or less.

The method or use of the present invention may further comprise the step of forming an electrode (typically a cathode) comprising the enriched lithium nickel oxide material. Typically, this is carried out by forming a slurry of the particulate enriched lithium nickel oxide, applying the slurry to the surface of a current collector (e.g. an aluminium current collector), and optionally processing (e.g. calendaring) to increase the density of the electrode. The slurry may comprise one or more of a solvent, a binder, carbon material and further additives.

Typically, the electrode will have an electrode density of at least 2.5 g/cm³, at least 2.8 g/cm³ or at least 3 g/cm³. It may have an electrode density of 4.5 g/cm³ or less, or 4 g/cm³ or less. The electrode density is the electrode density (mass/volume) of the electrode, not including the current collector the electrode is formed on. It therefore includes contributions from the active material, any additives, any additional carbon material, and any remaining binder.

The method or use of the present invention may further comprise constructing a battery or electrochemical cell including the electrode comprising the enriched lithium nickel oxide material. The battery or cell typically further comprises an anode and an electrolyte. The battery or cell may typically be a secondary (rechargeable) lithium (e.g. lithium ion) battery.

The present invention will now be described with reference to the following examples, which are provided to assist with understanding the present invention, and are not intended to limit its scope.

### Examples

### Sample Preparation

Lithium nickel oxide material (60g, Li_{1.03},Ni_{0.904}Co_{0.080}Mg_{0.008}O₂) was added with stirring to deionised water (30 mL) which had been pre heated to 60°C under reflux. The slurry was allowed to equilibrate to 60°C. Nitrate salts (quantities in Table 1 below) were dissolved in 20mL deionised water and added to the lithium nickel oxide material slurry. A further 10 mL deionised water was used to wash in the nitrate solution. The slurry was stirred for 10 minutes at 60°C, and then spray dried to collect the treated powder intermediate. The powder collected was placed in a fully dense alumina crucible and calcined in a furnace under an atmosphere of 20% O2, 80% N₂ with a total gas flow rate of 1 L/min. The calcination profile ramped at 5°C/min to 130°C, with a 5.5h hold, then a 5°C/min ramp to 450°C with a 1h hold, and then a 2°C/min ramp to 700°C with a 2h hold. The sample was then furnace cooled to below 200°C before removal. The calcined material was milled for 5 minutes in a ball mill using YSZ milling media (400g, 0.5" cylindrical) in a 0.3 gal mill pot.

**Table 1**

| **Sample** | **Nitrate Quantities** | | **Metal Concentrations** | | **Al wt%** | **Li wt%** |
|---|---|---|---|---|---|---|
| | Al(NO₃)₃.9H₂O (g) | LiNO₃ (g) | [Al] (mol/L) | [Li] (mol/L) | | |
| 1 | 5.87 | 0 | 0.261 | 0 | 2.56 | 0 |
| 2 | 68.80 | 0 | 3.057 | 0 | 30 | 0 |
| 3 | 5.87 | 1.09 | 0.261 | 0.263 | 2.56 | 2.6 |
| 4 | 68.80 | 12.77 | 3.057 | 3.087 | 30 | 30.3 |

The elemental composition of the samples was determined by ICP (Inductively Coupled Plasma) analysis. For that, 0.1 g of material were digested with aqua regia (3:1 ratio of hydrochloric acid and nitric acid) at ∼130°C and made up to 100 mL. The ICP-OES analysis was carried out on an Agilent 5110 using matrix matched calibration standards and yttrium as an internal standard. The lines and calibration standards used were instrument-recommended. The ICP compositions are given in Table 2 below.

**Table 2**

| **Sample** | **Product Formula (ICP)** |
|---|---|
| 1 | Li_{0.996}Ni_{0.893}Co_{0.079}Mg_{0.008}Al_{0.024}O₂ |
| 2 | Li_{0.830}Ni_{0.748}Co_{0.066}Mg_{0.007}Al_{0.238}O₂ |
| 3 | Li_{1.009}Ni_{0.888}Co_{0.078}Mg_{0.008}Al_{0.025}O₂ |
| 4 | Li_{1.012}Ni_{0.703}Co_{0.062}Mg_{0.007}Al_{0.227}O₂ |

### FIB-TEM and Elemental Mapping

Samples 1, 2 3 and 4 were subjected to FIB-TEM analysis, along with the untreated lithium nickel oxide material used to prepare the samples. The samples (cross-sections) were prepared using a focused ion beam instrument with a gallium ion beam at 30 kV. Final polishing was performed at 5 kV. The sample was examined using a JEM 2800 Scanning Transmission Electron Microscope using the following instrument conditions: Voltage (kV) 200; C2 aperture (um) 70 and 40. Compositional analysis by X-ray emission detection was carried out in the scanning mode.

Figure 1 shows a FIB-TEM image of a region of the untreated lithium nickel oxide material, showing the location of cobalt. The cobalt is evenly distributed throughout the sample. Small amounts of aluminium contamination were also detected, again evenly distributed throughout the sample. This demonstrates that prior to contact with the treatment solution, there is no enrichment of cobalt or aluminium.

Figures 2 and 3 show FIB-TEM images highlighting the aluminium content in two regions of Sample 1. The brighter areas show areas of greater aluminium concentration, indicating regions of higher Al concentration at the surface of the particle, and in the grain boundaries. Figures 4 and 5 show the same two regions of Sample 1 but the brighter areas show areas of greater cobalt concentration, indicating regions of higher Co concentration at the surface of the particle, and in the grain boundaries. It is highly surprising that cobalt enrichment is observed since the treatment solution did not contain cobalt ions.

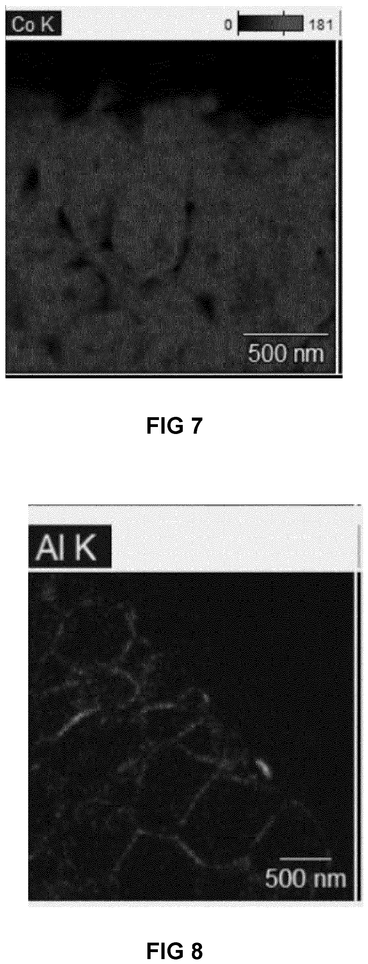

Figures 6 and 7 are FIB-TEM images of Sample 2. Figure 6 shows aluminium content indicating regions of higher Al concentration at the surface of the particle, and in the grain boundaries. Figure 7 shows cobalt content, indicating an even distribution of cobalt. The concentration of aluminium in the treatment solution was higher than that used for Sample 1, suggesting that the concentration of aluminium affects cobalt enrichment.

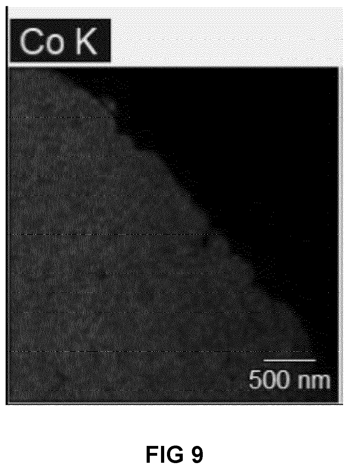

Figures 8 and 9 are FIB-TEM images of Sample 3. Figure 8 shows aluminium content indicating regions of higher Al concentration at the surface of the particle, and in the grain boundaries. Figure 9 shows cobalt content, indicating an even distribution of cobalt. The treatment solution used for Sample 3 is analogous for that used for Sample 1, where cobalt enrichment was observed, except that the treatment solution for Sample 3 included lithium ions. Therefore, the presence of lithium in the treatment solution appears to inhibit cobalt enrichment by the aluminium-containing treatment solution.

Sample 4 was analysed in the same way. Regions of higher Al concentration at the surface of the particle, and in the grain boundaries, were observed. An even distribution of cobalt was observed.

## Claims

1. Use of a treatment solution comprising aluminium ions at a concentration in the range from 0.05 mol/L to 1.5 mol/L to increase the concentration of cobalt at the surface of particulate lithium nickel oxide material and at the grain boundaries within the particulate nickel oxide material, thereby providing an enriched particulate lithium nickel oxide material.

2. Use according to claim 1 wherein the treatment solution as prepared has a concentration of lithium ions of 0.005 mol/L or less, and the treatment solution as prepared is substantially free of cobalt ions.

3. Use according to claim 1 or claim 2 wherein the use comprises
(a) contacting particulate lithium nickel oxide cathode material with the treatment solution to provide a treatment slurry;
(b) drying the treatment slurry to provide an intermediate treated material; and
(c) calcining the intermediate treated material to provide an enriched lithium nickel oxide cathode material comprising (i) a core comprising a plurality of grains and (ii) enriched regions at the surface of the core and at the grain boundaries within the core, the enriched regions comprising a higher concentration of aluminium and cobalt than the core.

4. Use according to any one of the preceding claims wherein the concentration of aluminium ions in the treatment solution as prepared is in the range from 0.1 to 0.7 mol/L.

5. Use according to claim 4 wherein the concentration of aluminium ions in the treatment solution as prepared is in the range from 0.15 to 0.35 mol/L.

6. Use according to any one of the preceding claims wherein the amount of aluminium is selected to provide 1 to 5 wt% aluminium based on the weight of metals in the lithium nickel oxide cathode material to be treated, excluding lithium.

7. Use according to any one of the preceding claims wherein the lithium nickel oxide cathode material contacted with the treatment solution has a formula according to Formula I:
LiₐNiₓCo_{y}Mg_{z}M_{q}O_{2+b} Formula I
in which
0.8 ≤ a ≤ 1.2
0.7 ≤ x < 1
0 ≤ y ≤ 0.3
0 ≤ z ≤ 0.1
0 ≤ q ≤ 0.2, and
-0.2 ≤ b ≤ 0.2;
wherein M is selected from Al, Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

8. Use according to any one of the preceding claims wherein the enriched lithium nickel oxide cathode material has a formula according to Formula II:
LiₐNiₓCo_{y}Mg_{z}AlₚM1_{q}O_{2+b} Formula II
in which
0.8 ≤ a ≤ 1.2
0.7 ≤ x < 1
0 ≤ y ≤ 0.3
0 ≤ z ≤ 0.1
0.004 ≤ p ≤ 0.015
0 ≤ q ≤ 0.2, and
-0.2 ≤ b ≤ 0.2;
wherein M1 is selected from Mn, V, Ti, B, Zr, Sr, Ca, Cu, Sn, Cr, Fe, Ga, Si, W, Mo, Ta, Y, Sc, Nb, Pb, Ru, Rh and Zn and combinations thereof.

9. Use according to claim 8 wherein 0.010 ≤ p ≤ 0.10.

10. Use according to claim 9 wherein 0.015 ≤ p ≤ 0.04.

11. Use according to any one of the preceding claims further comprising the step of forming an electrode (e.g. cathode) comprising the enriched lithium nickel oxide material.

12. Use according to claim 11 further comprising the step of forming a battery or electrochemical cell including the electrode.

13. A method of treating particulate lithium nickel oxide cathode material comprising
(a) contacting particulate lithium nickel oxide cathode material with a treatment solution comprising aluminium ions to provide a treatment slurry;
(b) drying the treatment slurry to provide an intermediate treated material; and
(c) calcining the intermediate treated material to provide an enriched lithium nickel oxide cathode material comprising (i) a core comprising a plurality of grains and (ii) enriched regions at the surface of the core and at the grain boundaries within the core, the enriched regions comprising a higher concentration of aluminium and cobalt than the core,
wherein the concentration of aluminium ions in the treatment solution is in the range from 0.05 mol/L to 1.5 mol/L.

14. A method according to claim 13 wherein the treatment solution as prepared has a concentration of lithium ions of 0.005 mol/L or less, and the treatment solution as prepared is substantially free of cobalt ions.
